# EUROPEAN PATENT APPLICATION

(11) **EP 4 844 702 A1**
(43) Date of publication of application: **25.11.2026**
(21) Application number: 26175831.2
(22) Date of filing: 30.04.2026
(51) Int. Cl.: G06V 20/00

(54) **METHODS AND SYSTEMS FOR DETERMINING THE AUTHENTICITY OF AN IDENTITY DOCUMENT**

(30) Priority: 22.05.2025 US 202519215413
(71) Applicant: Daon Technology, Douglas IM1 2LN (IM)
(72) Inventor: PEREZ-ROVIRA, Adria, Douglas (IM)
(74) Representative: Murgitroyd & Company

(57) **Abstract**

A method for determining the authenticity of an identity document is provided that includes obtaining, by an electronic device, image data of a genuine identity document. The genuine identity document includes a security feature. Moreover, the method includes encoding an area of the image data that includes the security feature to create a first embedding and obtaining image data of a second identity document. The second identity document includes a second security feature. Furthermore, the method includes encoding an area of the image data that includes the second security feature to create a second embedding, calculating a distance between the first and second embeddings, and comparing the distance against a threshold value. In response to determining the distance fails to satisfy the threshold value, the method determines the second identity document is genuine.

## Description

### BACKGROUND OF THE INVENTION

This invention relates generally to authenticating identity documents, and more particularly, to methods and systems for determining the authenticity of an identity document.

Individuals conduct transactions with many different service providers in person and remotely over the Internet. Network-based transactions conducted over the Internet may involve, for example, opening a bank account or similar account using a website or mobile application. Service providers typically require successfully identifying an individual before he or she is permitted to open a bank account or conduct any other type of network-based transaction involving sensitive information.

Service providers typically require individuals to upload an image of his or her identity document, like a driver's license or a passport, and a claim of identity to facilitate authentication. The uploaded images are typically analyzed to determine whether the identity document in the uploaded image is authentic, jurisdictionally accurate, and unexpired. The analysis may be manual or automatic.

Imposters have been known to impersonate individuals by providing a false claim of identity supported by a fraudulent identity document when attempting to deceive a service provider into concluding the imposter is the person he or she claims to be. Such impersonations are known as spoofing. Additionally, impostors have been known to use many methods to obtain or create fraudulent identity documents. For example, imposters have been known to alter identity documents by laminating another person's image onto their own identity document or to change the text of another person's identity document. The imposters upload images of the altered documents, for example, when attempting to open a bank account. Such fraudulent identity documents are difficult to detect using known techniques. Consequently, opening a banking account or other type of similar account with an uploaded image of an identity document captured at a remote location depends on verifying the identity document in the uploaded image is authentic.

Known techniques for authenticating identity documents use image registration, feature extraction, machine learning models, and deep learning. Such techniques depend on properly training machine learning models, but training requires an enormous number of genuine and fraudulent identity documents. It is difficult, time-consuming and expensive to obtain the enormous number of genuine and fraudulent identity documents necessary for proper training. As a result, there is a need to develop and/or train models capable of accurately authenticating identity documents without using training data.

Thus, it would be advantageous and an improvement over the relevant technology to provide a method and an electronic device capable of implementing algorithms that do not require enormous numbers of genuine and fraudulent identity documents for training and are capable of accurately authenticating identity documents.

### BRIEF DESCRIPTION OF THE INVENTION

An aspect of the present disclosure provides a method for determining the authenticity of an identity document including obtaining, by an electronic device, image data of a genuine identity document. The genuine identity document includes a security feature. Moreover, the method includes encoding an area of the image data that includes the security feature to create a first embedding and obtaining image data of a second identity document that includes a second security feature. The method further includes encoding an area of the image data that includes the second security feature to create a second embedding, calculating a distance between the first and second embeddings, and comparing the distance against a threshold value. In response to determining the distance fails to satisfy the threshold value, the method determines the second identity document is genuine.

In an embodiment of the present disclosure the method further includes determining the second identity document is fraudulent in response to determining the distance satisfies the threshold value.

Another aspect of the present disclosure provides an electronic device for determining the authenticity of an identity document including a processor and a memory configured to store data. The electronic device is associated with a network and the memory is in communication with the processor. The memory has instructions stored thereon which, when read and executed by the processor, cause the electronic device to obtain image data of a genuine identity document. The genuine identity document includes a security feature. Moreover, the instructions, when read and executed by the processor, cause the electronic device to encode an area of the image data that includes the security feature to create a first embedding and to obtain image data of a second identity document that includes a second security feature. Furthermore, the instructions, when read and executed by the processor, cause the electronic device to encode an area of the image data that includes the second security feature to create a second embedding, calculate a distance between the first and second embeddings, and compare the distance against a threshold value. In response to determining the distance fails to satisfy the threshold value, the instructions, when read and executed by the processor, cause the electronic device to determine the identity document is genuine.

In an embodiment of the present disclosure, the instructions when read and executed by the processor, further cause the electronic device to determine the second identity document is fraudulent in response to determining the distance satisfies the threshold value.

Another aspect of the present disclosure provides a method for determining the authenticity of an identity document that includes encoding text describing a security feature in a genuine identity document to create a first embedding. Furthermore, the method includes obtaining image data of a second identity document that includes a second security feature, encoding an area of the image data that includes the second security feature to create a second embedding, calculating a distance between the first and second embeddings, and comparing the distance against a threshold value. In response to determining the distance fails to satisfy the threshold value, the second identity document is determined to be genuine.

In an embodiment of the present disclosure the method further includes determining the second identity document is fraudulent in response to determining the distance satisfies the threshold value.

Accordingly there is provided a method, an electronic device, and a computer program as detailed in the claims that follow.

### BRIEF DESCRIPTION OF THE DRAWINGS

Figure 1 is a schematic diagram of an example computing system for determining the authenticity of an identity document according to an embodiment of the present disclosure;
Figure 2 is a more detailed schematic diagram of an example electronic device included in the system shown in Figure 1;
Figure 3 is a diagram illustrating an image of an example identity document;
Figure 4 is a diagram illustrating an example cropped identity document security feature image;
Figure 5 is a flowchart illustrating an example method and algorithm for determining the authenticity of an identity document according to an embodiment of the present disclosure; and
Figure 6 is a flowchart illustrating an alternative example method and algorithm for determining the authenticity of an identity document according to an alternative embodiment of the present disclosure.

### DETAILED DESCRIPTION OF THE INVENTION

The following detailed description is made with reference to the accompanying drawings and is provided to assist in a comprehensive understanding of various example embodiments of the present disclosure. The following description includes various details to assist in that understanding, but these are to be regarded merely as examples and not for the purpose of limiting the present disclosure as defined by the appended claims and their equivalents. The words and phrases used in the following description are merely used to enable a clear and consistent understanding of the present disclosure. In addition, descriptions of well-known structures, functions, and configurations may have been omitted for clarity and conciseness. Those of ordinary skill in the art will recognize that various changes and modifications of the example embodiments described herein can be made without departing from the spirit and scope of the present disclosure.

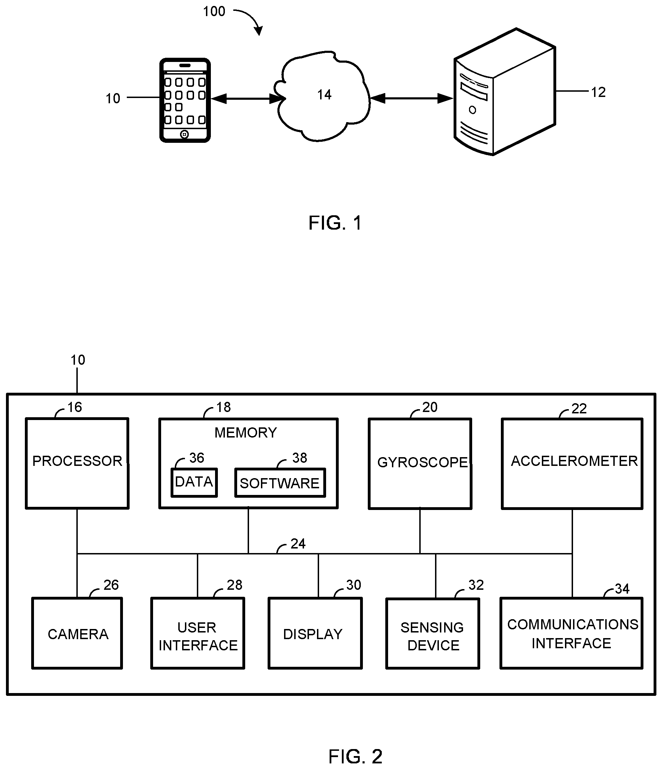

Figure 1 is a schematic diagram of an example computing system 100 for determining the authenticity of an identity document according to an embodiment of the present disclosure. As shown in Figure 1, the main elements of the system 100 include an electronic device 10 and a server 12 communicatively connected via a network 14.

In Figure 1, the electronic device 10 can be any electronic device capable of at least downloading applications over the Internet, running applications, capturing and storing data temporarily and/or permanently, and otherwise performing any and all functions, methods and/or algorithms described herein by any computer, computer system, server or electronic device that may be included in the system 100. For example, the electronic device 10 may be any type of server or computer implemented as a network server or network computer. Other examples of the electronic device 10 include, but are not limited to, a cellular phone, any wireless hand-held consumer electronic device, a smart phone, a tablet computer, a phablet computer, a laptop computer, and a personal computer (PC).

The electronic device 10 is typically associated with a person who operates the device 10.

The server 12 can be, for example, any type of server or computer implemented as a network server or network computer. The server 12 is an electronic device so may be alternatively referred to as an electronic device. Additionally, the electronic device 10 and the server 12 may each be considered information systems so may alternatively be referred to as such.

The network 14 may be implemented as a 5G communications network. Alternatively, the network 14 may be implemented as any wireless network including, but not limited to, 4G, 3G, Wi-Fi, Global System for Mobile (GSM), Enhanced Data for GSM Evolution (EDGE), and any combination of a LAN, a wide area network (WAN) and the Internet. The network 14 may also be any type of wired network or a combination of wired and wireless networks.

It is contemplated by the present disclosure that the number of electronic devices 10 and servers 12 is not limited to the number shown in the system 100. Rather, any number of electronic devices 10 and servers 12 may be included in the system 100.

Figure 2 is a more detailed schematic diagram of the electronic device 10 for determining the authenticity of an identity document according to an embodiment of the present disclosure. The electronic device 10 includes components such as, but not limited to, one or more processors 16, a memory 18, a gyroscope 20, an accelerometer 22, a bus 24, a camera 26, a user interface 28, a display 30, a sensing device 32, and a communications interface 34. General communication between the components in the electronic device 10 is provided via the bus 24.

The electronic device 10 can be any electronic device capable of at least downloading applications over the Internet, running applications, capturing and storing data temporarily and/or permanently, and otherwise performing any and all functions described herein by any computer, computer system, server or electronic device. For example, the electronic device 10 may be any type of server or computer implemented as a network server or network computer. Other examples include, but are not limited to, a cellular phone, any wireless hand-held consumer electronic device, a smart phone, a tablet computer, a phablet computer, a laptop computer, and a personal computer (PC).

The processor 16 executes software instructions, or computer programs, stored in the memory 18. As used herein, the term processor is not limited to just those integrated circuits referred to in the art as a processor, but broadly refers to a computer, a microcontroller, a microcomputer, a programmable logic controller, an application specific integrated circuit, and any other programmable circuit capable of executing at least a portion of the functions and/or methods described herein. The above examples are not intended to limit in any way the definition and/or meaning of the term "processor."

The memory 18 may be any non-transitory computer-readable recording medium. Non-transitory computer-readable recording media may be any tangible computer-based device implemented in any method or technology for short-term and long-term storage of information or data. Moreover, the non-transitory computer-readable recording media may be implemented using any appropriate combination of alterable, volatile or non-volatile memory or non-alterable, or fixed, memory. The alterable memory, whether volatile or non-volatile, can be implemented using any one or more of static or dynamic RAM (Random Access Memory), a floppy disc and disc drive, a writeable or re-writeable optical disc and disc drive, a hard drive, flash memory or the like. Similarly, the non-alterable or fixed memory can be implemented using any one or more of ROM (Read-Only Memory), PROM (Programmable Read-Only Memory), EPROM (Erasable Programmable Read-Only Memory), EEPROM (Electrically Erasable Programmable Read-Only Memory), and disc drive or the like. Furthermore, the non-transitory computer-readable recording media may be implemented as smart cards, SIMs, any type of physical and/or virtual storage, or any other digital source such as a network or the Internet from which computer programs, applications or executable instructions can be read.

The memory 18 may be used to store any type of data 36, for example, data records of people and a database of images in which each image is of an identity document. Each data record is typically for a different person. The data record for each person may include data such as, but not limited to, the person's name, personal data, and images of identity documents associated with the person. Identity documents include, but are not limited to, passports, driver's licenses, and identity cards.

The term "personal data" as used herein includes any demographic information about a person as well as contact information pertinent to the person. Such demographic information includes, but is not limited to, a person's name, age, date of birth, street address, email address, citizenship, marital status, and contact information. Contact information can include devices and methods for contacting the person.

Additionally, the memory 18 can be used to store any type of software 38. As used herein, the term "software" is intended to encompass an executable computer program that exists permanently or temporarily on any non-transitory computer-readable recordable medium that causes the electronic device 10 to perform at least a portion of the functions, methods, and/or algorithms described herein. Application programs are software and include, but are not limited to, operating systems, Internet browser applications, machine learning algorithms, machine learning models, computer programs that analyze and determine the authenticity of identity documents, and any other software and/or any type of instructions associated with algorithms, processes, or operations for controlling the general functions and operations of the electronic device 10. The software may also include computer programs that implement buffers and use RAM to store temporary data.

Machine learning models have parameters that are modified during training to optimize functionality of the models trained using a machine learning algorithm (MLA). A machine learning model (MLM) for verifying the authenticity of identity documents in images may be trained using a machine learning algorithm (MLA). Such machine learning models include, but are not limited to, comprehensive language image pre-training (CLIP) models.

CLIP models are large multimodal models that leverage language and image information. CLIP models typically include an image encoder and a text encoder. The image encoder is trained to encode image data into an embedding space, for example, a vector including five hundred and twelve values. The text encoder is trained to embed text descriptions of image data into the same embedding space, that is, the same vector with the same five hundred and twelve values. As a result, it is contemplated by the present disclosure that pre-trained CLIP models may be used to create distinct and representative embeddings of images or text descriptions of images without further training, thus bypassing the need to obtain an enormous number of genuine and fraudulent identity documents to train a machine learning model capable of accurately authenticating an identity document included in an image.

Pre-trained CLIP models generally encode only human concepts of the image because both the text and the image must be encoded simultaneously. The human concepts are those that can be described by text, for example, a security feature on an identity document. Pre-trained CLIP models also facilitate generating equal, or at least similar, embeddings for an image and for text describing the image. Moreover, pre-trained CLIP models can be used to classify, encode, validate, and identify features not encountered during training. Features include, for example, security features on identity documents. More specifically, pre-trained CLIP models may be used to validate features, for example, security features that appear on identity documents when only one identity document image is available and may use a text description of the security feature to validate the security feature. Thus, it is contemplated by the present disclosure that pre-trained CLIP models can be used to facilitate validating security features that appear on images of identity documents to facilitate authenticating the identity document. As a result, it is not necessary to obtain an enormous number of genuine and fraudulent identity documents to train a machine learning model capable of accurately authenticating an identity document included in an image.

The camera 26 captures image data. As used herein, capture means to record data temporarily or permanently, for example, image data of identity documents. The camera 26 can be one or more imaging devices configured to record image data of identity documents of a person while utilizing the electronic device 10. Moreover, the camera 26 is capable of recording image data under any lighting conditions including infrared light. The camera 26 may be integrated into the electronic device 10 as one or more front-facing cameras and/or one or more rear facing cameras that each incorporates a sensor, for example and without limitation, a CCD or CMOS sensor. Alternatively, the camera 26 can be external to the electronic device 10. Image data of an identity document include an image of the document.

The user interface 28 and the display 30 allow interaction between a person and the electronic device 10. The display 30 may include a visual display or monitor that displays information. For example, the display 30 may be a Liquid Crystal Display (LCD), an active matrix display, plasma display, or cathode ray tube (CRT). The user interface 28 may include a keypad, a camera, a keyboard, a mouse, an illuminator, a signal emitter, a microphone, and/or speakers.

Moreover, the user interface 28 and the display 30 may be integrated into a touch screen display. Accordingly, the display may also be used to show a graphical user interface, which can display various data and provide "forms" that include fields that allow for the entry of information by the person. Touching the screen at locations corresponding to the display of a graphical user interface allows the person to interact with the electronic device 10 to enter data, change settings, control functions, etc. Consequently, when the touch screen is touched, the user interface 30 communicates this change to the processor 16 and settings can be changed or information entered by a person can be captured and stored in the memory 18.

The sensing device 32 may include Radio Frequency Identification (RFID) components or systems for receiving information from other devices (not shown) and for transmitting information to other devices. The sensing device 32 may alternatively, or additionally, include components with Bluetooth, Near Field Communication (NFC), Zigbee communication protocol, infrared, or other similar capabilities. Communications between the electronic device 10 and other devices (not shown) may occur via NFC, RFID, Bluetooth, Zigbee communication protocol, or the like only so a network connection from the electronic device 10 is unnecessary.

The communications interface 34 may include various network cards, and circuitry implemented in software and/or hardware to enable wired and/or wireless communications with other devices (not shown). Communications include, for example, conducting cellular telephone calls and accessing the Internet over a network. By way of example, the communications interface 34 may be a digital subscriber line (DSL) card or modem, an integrated services digital network (ISDN) card, a cable modem, or a telephone modem to provide a data communication connection to a corresponding type of telephone line. As another example, the communications interface 34 may be a local area network (LAN) card (e.g., for Ethemet.TM. or an Asynchronous Transfer Model (ATM) network) to provide a data communication connection to a compatible LAN. As yet another example, the communications interface 34 may be a wire or a cable connecting the electronic device 10 with a LAN, or with accessories such as, but not limited to, other electronic devices. Further, the communications interface 34 may include peripheral interface devices, such as a Universal Serial Bus (USB) interface, a PCMCIA (Personal Computer Memory Card International Association) interface, and the like.

The communications interface 34 also allows the exchange of information across the network 14 between the electronic device 10 and any other device (not shown). The exchange of information may involve the transmission of radio frequency (RF) signals through an antenna (not shown).

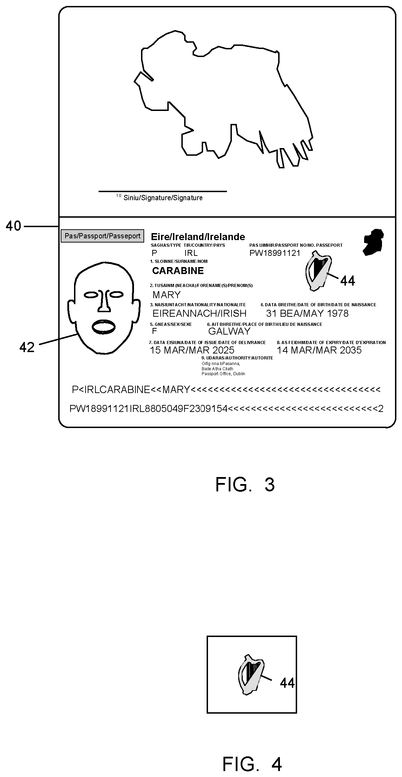

Figure 3 is a diagram illustrating an image of an example identity document 40. The example identity document 40 is a passport. However, it is contemplated by the present disclosure that the identity document 40 may alternatively be any identity document used by a person to prove a claim of identity, for example, a driver's license or an identification card. The image may be captured with the electronic device 10 or any other device (not shown) in the system 100 capable of communicating with the electronic device 10 and the server 12 via the network 14.

The identity document 40 includes an image 42 of the person to whom the identity document was issued, other information about the person and a security feature 44. The security feature 44 as described herein can be, for example, a harp. However, it is contemplated by the present disclosure that the security feature 44 may be any feature or visually unique object present in an identity document. An alternative, or additional security feature may be a hologram or any other type of Optically Variable Device (OVD). It is contemplated by the present disclosure that the number of security features 44 is not limited to the number shown in identity document 40. Rather, any number of the same or different security features 44 may be included in the identity document 40.

The other information can include, for example, the person's name, sex, nationality, and date of birth. Additionally, the identity document 40 can include a renewal date and an expiration date. Any text information on the identity document 40 may be obtained from the image using, for example, optical character recognition (OCR) techniques.

The image of the identity document 40 may be cropped to include an area immediately surrounding the security feature 44 only. The cropped area is essentially an image of the security feature 44 only.

Figure 4 is a diagram illustrating an example cropped image of the security feature 44 only. During an identity document authentication transaction, a cropped image of the security feature 44 may be obtained from an image of a genuine identity document and from an image of an identity document provided during authentication. The electronic device 10 may run, for example, a pre-trained CLIP model to encode the genuine identity document security feature into a first embedding and the provided document security feature into a second embedding. A distance between the first and second embeddings can be calculated and compared against a threshold value. The distance may be calculated, for example, as a cosine distance, a Euclidian distance, an inner product, or using any other distance or similarity metric that facilitates comparing two vectors.

When the calculated distance fails to satisfy the threshold value, the two images may be considered similar. As a result, the identity document in the provided image may be considered genuine.

Instead of using an image of the security feature 44 to create the first embedding, a text description of the security feature 44 may be used. A text description of the security feature 44 may be, for example, "a harp" or "a representation of a decorated harp with the soundboard to the right. The image is created using thin blue lines". An image of a second security feature on a provided identity document is then used to create a second embedding. A distance may be calculated between the encodings as, for example, a cosine distance, a Euclidian distance, an inner product, or in any other distance or similarity metric that facilitates comparing two vectors. When the calculated distance fails to satisfy the threshold value, the text description and the provided image of the security feature may be considered similar. As a result, the identity document in the provided image may be considered genuine. It is contemplated by the present disclosure that multiple text descriptions of the same security feature may be combined and encoded to create the first embedding.

Service providers typically require individuals to upload an image of his or her identity document, like a driver's license or a passport, and a claim of identity to facilitate authentication. The uploaded images are typically analyzed to determine whether the identity document in the uploaded image is authentic jurisdictionally accurate, and unexpired. The analysis may be manual or automatic.

Imposters have been known to impersonate individuals by providing a false claim of identity supported by a fraudulent identity document when attempting to deceive a service provider into concluding the imposter is the person he or she claims to be. Such impersonations are known as spoofing. Additionally, impostors have been known to use many methods to obtain or create fraudulent identity documents. For example, imposters have been known to alter identity documents by laminating another person's image onto their own identity document or to change the text of another person's identity document. The imposters upload images of the altered documents, for example, when attempting to open a bank account. Such fraudulent identity documents are difficult to detect using known techniques. Consequently, opening a banking account or other type of similar account with an uploaded image of an identity document captured at a remote location depends on verifying the identity document in the uploaded image is authentic.

Known techniques for authenticating identity documents use image registration, feature extraction, machine learning models, and deep learning. Such techniques depend on properly training machine learning models, but training requires an enormous number of genuine and fraudulent identity documents. It is difficult, time-consuming and expensive to obtain the enormous number of genuine and fraudulent identity documents necessary for proper training. As a result, there is a need to develop and/or train models capable of accurately authenticating identity documents without using training data.

To address these problems the electronic device 10 may obtain image data of a genuine identity document. The genuine identity document can include a security feature 44. An area of the image data that includes the security feature 44 can be encoded to create a first embedding. The electronic device 10 can also obtain image data of a second identity document that includes a second security feature. The electronic device 10 can encode an area of the image data that include the second security feature to create a second embedding, calculate a distance between the first and second embeddings, and compare the distance against a threshold value. In response to determining the distance fails to satisfy the threshold value, the electronic device 10 can determine that the second identity document is genuine.

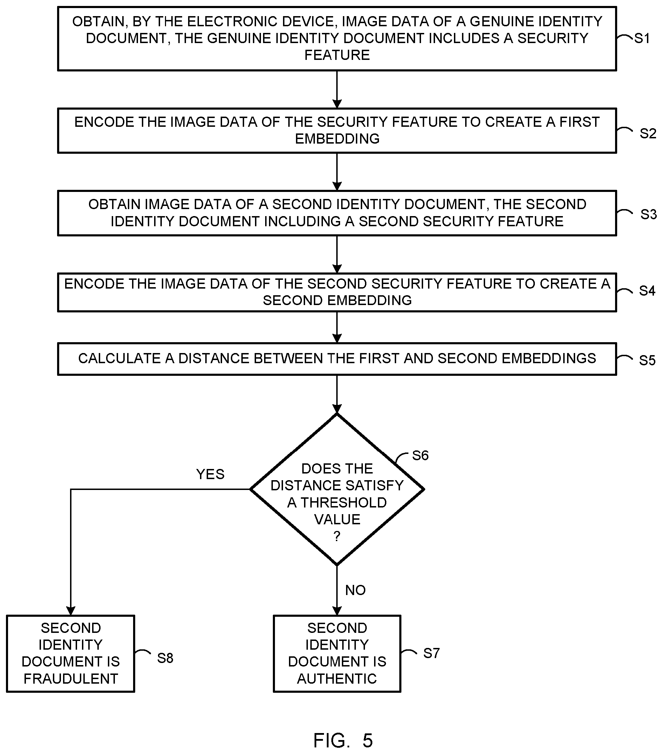

Figure 5 is a flowchart illustrating an example method and algorithm for determining the authenticity of an identity document according to an embodiment of the present disclosure. Figure 5 illustrates example steps performed when the electronic device 10 runs software 38 including, for example, a pre-trained CLIP model stored in the memory 18 to determine the authenticity of an identity document in an image.

Pre-trained CLIP models facilitate generating equal, or at least similar, embeddings for an image and for text describing the image. Moreover, pre-trained CLIP models can be used to classify, encode, validate, and identify features not encountered while training the CIP models. Features include, for example, security features on identity documents. More specifically, pre-trained CLIP models may be used to validate features, for example, security features that appear on identity documents when only one identity document image is available and may use a text description of the security feature only to validate the security feature. Thus, it is contemplated by the present disclosure that pre-trained CLIP models can be used to facilitate validating security features that appear on images of identity documents to facilitate authenticating the identity document. Pre-trained CLIP models may be used to authenticate features, for example, security features 44 that were not used in training the CLIP model.

In step S1, the software 38 executed by the processor 16 causes the electronic device 10 to obtain image data of a genuine identity document, for example, the identity document 40. The electronic device 10 may obtain the identity document image data by, for example, capturing the image data or receiving via the network 14 the image data from another electronic device (not shown) in the computer system 100. The image data may be, for example, a digital photograph.

The identity document may be a passport. However, it is contemplated by the present disclosure that the identity document may alternatively be any identity document used by a person to prove a claim of identity, for example, a driver's license or an identification card. The identity document may include, for example, text, an image of a person associated with the identity document, and a security feature. It is contemplated by the present disclosure that data for the identity document and the security feature were not used in training the CLIP model.

The image of the identity document may be, for example, cropped to include an area immediately surrounding the security feature only. The cropped area is essentially an image of the security feature only. The security feature may be, for example, a harp.

In step S2, the software 38 executed by the processor 16 causes the electronic device 10 to encode the cropped security feature image to create a first embedding. In step S3, the software 38 executed by the processor 16 causes the electronic device 10 to obtain image data of a second identity document provided during, for example, an authentication transaction that includes a second security feature. Moreover, the software 38 executed by the processor 16 causes the electronic device 10 to, for example, crop the second identity document image to create an image of the second security feature. In step S4, the software 38 executed by the processor 16 causes the electronic device 10 to encode the cropped second security feature image to create a second embedding.

Next, in step S5, the software 38 executed by the processor 16 causes the electronic device 10 to calculate a distance between the first and second embeddings. The distance may be calculated as, for example, a cosine distance, a Euclidian distance, an inner product, or any other distance or similarity metric that facilitates comparing the two embeddings.

In step S6, the software 38 executed by the processor 16 causes the electronic device 10 to compare the distance against a threshold value and determine whether the calculated distance satisfies the threshold value. Next, in step S7, in response to determining the distance fails to satisfy the threshold value, the software 38 executed by the processor 16 causes the electronic device 10 to determine that the second identity document is genuine. Otherwise, in step S8, when the distance satisfies the threshold value, the software 38 executed by the processor 16 causes the electronic device 10 to determine that the second identity document is fraudulent.

Although the example method and system described herein with regard to Figure 5 encodes images of the first security feature to create the first embedding, it is contemplated by the present disclosure that a text description of the first security feature may alternatively, or additionally, be encoded to create the first embedding.

Although the example method and system described herein with regard to Figure 5 obtains image data of a genuine identity document and crops the obtained image to include the security feature only, it is contemplated by the present disclosure that alternatively a computed embedding of the security feature may be obtained. The computer embedding may be obtained, for example, by receiving the embedding from another electronic device (not shown) in the computer system 100.

Using, for example, pre-trained CLIP models as described in the example method and algorithm facilitates creating distinct and representative embeddings of images or text descriptions of images without further training, thus eliminating the need to obtain an enormous number of genuine and fraudulent identity documents to train a machine learning model capable of accurately authenticating an identity document included in an image. As a result, the method and algorithm facilitates enhancing the accuracy and trustworthiness of identity document authentication results while eliminating the time and costs associated with training machine learning models capable of accurately authenticating identity documents.

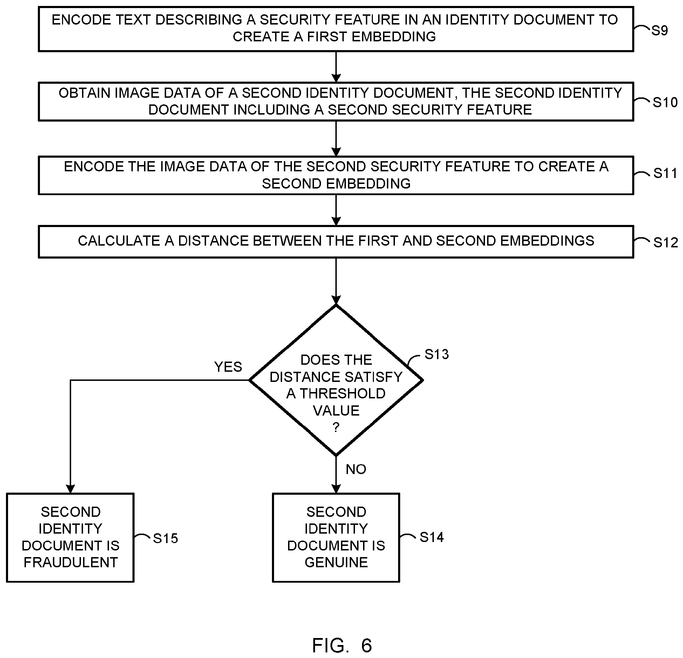

Figure 6 is a flowchart illustrating an alternative example method and algorithm for determining the authenticity of an identity document according to an alternative embodiment of the present disclosure. Figure 6 illustrates example steps performed when the electronic device 10 runs software 38 including, for example, a pre-trained CLIP model stored in the memory 18 to determine the authenticity of an identity document in an image.

The method and algorithm illustrated in Figure 6 is similar to the method and algorithm illustrated in Figure 5. However, instead of using the image of a security feature to create the first embedding, a text description of the security feature is used.

In step S9, the software 38 executed by the processor 16 causes the electronic device 10 to encode text describing a security feature in an identity document to create the first embedding. A text description of the security feature 44 may be, for example, "a harp" or "a representation of a decorated harp with the soundboard to the right. The image is created using thin blue lines".

The electronic device 10 may obtain text describing the security feature by, for example, obtaining a record description from the memory 18, or receiving via the network 14, the text from another electronic device (not shown) in the computer system 100. Alternatively, the electronic device 10 may receive the embedding instead of the text description.

Although a single text description is encoded to create the first embedding, it is contemplated by the present disclosure that multiple text descriptions may be combined and encoded to create the first embedding.

The identity document may be a passport. However, it is contemplated by the present disclosure that the identity document may alternatively be any identity document used by a person to prove a claim of identity, for example, a driver's license or an identification card.

Next, in step S10, the software 38 executed by the processor 16 causes the electronic device 10 to obtain image data of a second identity document that includes a second security feature and crop the second identity document image to include image data of the second security feature only. The cropped second identity document is essentially an image of the second security feature only.

In step S11, the software 38 executed by the processor 16 causes the electronic device 10 to encode the image data of the second security feature to create a second embedding and, in step S12, to calculate a distance between the first and second embeddings. The distance may be calculated as, for example, a cosine distance, a Euclidian distance, an inner product, or any other metric that facilitates comparing the two embeddings.

In step S13, the software 38 executed by the processor 16 causes the electronic device 10 to compare the distance against a threshold value and determine whether the calculated distance satisfies the threshold value. Next, in step S14, in response to determining the distance fails to satisfy the threshold value, the software 38 executed by the processor 16 causes the electronic device 10 to determine that the second identity document is genuine. Otherwise, in step S15, when the distance satisfies the threshold value, the software 38 executed by the processor 16 causes the electronic device 10 to determine that the second identity document is fraudulent.

The threshold value described herein may be satisfied when the distance is greater than or equal to the threshold value. Other threshold values may be satisfied when the distance is less than or equal to the threshold value. Alternatively, the threshold value may include multiple threshold values, each of which is required to be satisfied to satisfy the threshold value.

Although the example methods and systems described herein with regard to Figures 5 and 6 encode either images or text descriptions of the security feature to create embeddings, it is contemplated by the present disclosure that text descriptions and images of the security feature may alternatively, or additionally, be combined and the combination encoded to create a single embedding.

Using the methods and algorithms for determining the authenticity of an identity document as described herein enable using readily available pre-trained models to accurately authenticate identity documents without obtaining an enormous number of genuine and fraudulent identity documents. As a result, the methods and algorithms facilitate enhancing the accuracy and trustworthiness of identity document authentication results while eliminating the time and costs associated with training machine learning models capable of accurately authenticating identity documents.

It is contemplated by the present disclosure that the example methods and algorithms described herein may be conducted entirely by the electronic device 10; partly by the electronic device 10 and partly by the server 12; or by any other combination of other servers (not shown), electronic devices (not shown), or computers (not shown) operable to communicate with the electronic device 10 and the server 12 via the network 14. Furthermore, data described herein as being stored in the electronic device 10 may alternatively, or additionally, be stored in any other server (not shown), electronic device (not shown), or computer (not shown) operable to communicate with the electronic device 10 via the network 14.

Additionally, the example methods and algorithms described herein may be implemented with any number and organization of computer program components. Thus, the methods and algorithms described herein are not limited to specific computer-executable instructions. Alternative example methods and algorithms may include different computer-executable instructions or components having more or less functionality than described herein.

The example methods and/or algorithms described above should not be considered to imply a fixed order for performing the method and/or algorithm steps. Rather, the method and/or algorithm steps may be performed in any order that is practicable, including simultaneous performance of at least some steps. Moreover, the method and/or algorithm steps may be performed in real time or in near real time. It should be understood that for any method and/or algorithm described herein, there can be additional, fewer, or alternative steps performed in similar or alternative orders, or in parallel, within the scope of the various embodiments, unless otherwise stated. Furthermore, the invention is not limited to the embodiments of the methods and/or algorithms described above in detail.

## Claims

1. A computer-implemented method for determining the authenticity of an identity document, the method comprising:
creating a first embedding representing a security feature (44) of a genuine identity document (40), wherein the first embedding is created from at least one of:
image data of the security feature (44) of the genuine identity document (40); and
text describing the security feature (44) of the genuine identity document (40);
obtaining image data of a second identity document, the second identity document including a second security feature; *
encoding an area of the image data of the second identity document that includes the second security feature to create a second embedding; *
calculating a distance between the first and second embeddings; *
comparing the calculated distance against a threshold value; and
determining the authenticity of the second identity document based on the comparison.

2. The method of claim 1, wherein determining the authenticity of the second identity document comprises: *
in response to determining the distance fails to satisfy the threshold value, determining the second identity document is genuine; and
in response to determining the distance satisfies the threshold value, determining the second identity document is fraudulent.

3. The method of claim 1 or 2, wherein the first embedding is created by encoding the image data of the security feature (44) of the genuine identity document (40).

4. The method of claim 3, further comprising cropping the image data of the genuine identity document to an area immediately surrounding the security feature (44) prior to said encoding.

5. The method of claim 1 or 2, wherein the first embedding is created by encoding the text describing the security feature (44) of the genuine identity document (40).

6. The method of claim 1 or 2, wherein the first embedding is created by encoding a combination of image data of the security feature (44) and text describing the security feature (44).

7. The method of any preceding claim, wherein the first and second embeddings are created using a pre-trained comprehensive language image pre-training, CLIP, model.

8. The method of any preceding claim, wherein the distance is calculated as one of a cosine distance, a Euclidian distance, or an inner product.

9. An electronic device (10) for determining the authenticity of an identity document, the device comprising:
a processor (16); and
a memory (18) in communication with the processor (16), the memory storing instructions (38) which, when executed by the processor (16), cause the device (10) to carry out the method of any one of claims 1 to 8.

10. A computer program product comprising instructions (38) which, when the program is executed by a computer, cause the computer to carry out the method of any one of claims 1 to 8.

11. A method for determining the authenticity of an identity document comprising the steps of:
obtaining, by an electronic device, image data of a genuine identity document, the genuine identity document including a security feature;
encoding an area of the image data that includes the security feature to create a first embedding;
obtaining image data of a second identity document, the second identity document including a second security feature;
encoding an area of the image data that includes the second security feature to create a second embedding;
calculating a distance between the first and second embeddings;
comparing the distance against a threshold value; and
in response to determining the distance fails to satisfy the threshold value, determining the second identity document is genuine.

12. The method according to claim 11, further comprising determining the second identity document is fraudulent in response to determining the distance satisfies the threshold value.

13. A method for determining the authenticity of an identity document comprising the steps of:
encoding text describing a security feature in a genuine identity document to create a first embedding;
obtaining image data of a second identity document, the second identity document including a second security feature;
encoding an area of the image data that includes the second security feature to create a second embedding;
calculating a distance between the first and second embeddings;
comparing the distance against a threshold value; and
in response to determining the distance fails to satisfy the threshold value, determining the second identity document is genuine.

14. The method according to claim 13, further comprising determining the second identity document is fraudulent in response to determining the distance satisfies the threshold value.

15. An electronic device (10) for determining the authenticity of an identity document, the device comprising:
a processor (16); and
a memory (18) in communication with the processor (16), the memory storing instructions (38) which, when executed by the processor (16), cause the device (10) to carry out the method of any one of claims 11 to 14.
